# EUROPEAN PATENT APPLICATION

(11) **EP 4 733 877 A1**
(43) Date of publication of application: **29.04.2026**
(21) Application number: 25210504.4
(22) Date of filing: 22.10.2025
(51) Int. Cl.: G05D 1/246, G05D 1/689, G05D 1/698

(54) **MAINTAINING LINE-OF-SIGHT IN WIRELESS HYBRID MOBILE MESH NETWORKS**

(30) Priority: 22.10.2024 US 202463710088 P
(71) Applicant: SPACERAKE, INC., Cambridge, Massachusetts 02139 (US)
(72) Inventor: WACHS, Jordan, Sudbury, 01776 (US); MARLOW, Weston A, Lanesborough, 01237 (US); MATHASON, Brian, Lexington, 02421 (US); KHATRI, Sanjay, Medford, 02155 (US); UTTAMCHANDANI, Avinash, Somerville, 02143 (US); WERTHEIMER, Jeremy M., Brookline, 02445 (US); SERRA, Paul, Cambridge, 02139 (US); CAHOY, Kerri, Concord, 01742 (US); KAGE, Patrick, Glastonbury, 06033 (US)
(74) Representative: Pearl Cohen UK

(57) **Abstract**

A wireless mesh data network composed principally of Unmanned Aerial Vehicle (UAV)-platformed nodes intercommunicating via hybrid links utilizing Radio Frequency (RF) and/or Free Space Optical (FSO) data communications, and provided with novel features and capabilities for acquiring, maintaining, and recovering Line-Of-Sight (LOS) between communicating nodes. FSO communications are preferred for high bandwidth and security, but it is not always possible to provide Line-Of-Sight (LOS) between communicating nodes, as required by FSO, because of obstruction by natural and artificial features of the environment. The provided novel features and capabilities of the invention optimize and enhance the overall network LOS status.

## Description

### FIELD

The present invention relates to communication networks, specifically to mobile wireless mesh networks utilizing both free-space optical (FSO) and radio frequency (RF) communication modes.

### BACKGROUND

Mobile mesh communication networks offer modern communication systems flexibility, redundancy, and ability to scale across various platforms and applications in a variety of environments. Traditional wireless mobile mesh networks primarily rely on radio frequency (RF) communication, which is often susceptible to interference, bandwidth limitations, and range constraints. Free-Space Optical (FSO) communication offers a high-bandwidth, secure alternative, but is limited to line-of-sight (LOS) communications and by environmental conditions such as fog, rain, or smoke. Unfortunately, LOS communication between mobile nodes is vulnerable to obstructions from natural and artificial features of the environmental topography. It is therefore highly desirable to have a wireless mesh network for LOS node communications, such that the network is capable of configuring the respective positions (geographical locations) of the mobile nodes to acquire, maintain, and recover LOS between the nodes in environments with topographical features capable of obstructing LOS. This goal is attained by the present invention.

### SUMMARY

Embodiments of the present invention provide a mobile FSO/RF hybrid mesh communication network supporting nodes which communicate via FSO only, RF only, and hybrid nodes capable of both FSO and RF communication, and which are capable of anticipating, avoiding, and recovering from loss of LOS communications between nodes due to changes in the locations of the nodes resulting in obstruction by features of the environmental topology. Embodiments of the present invention are principally concerned with network nodes aboard Unmanned Aerial Vehicles (UAVs), especially UAVs capable of Vertical Takeoff and Landing (VTOL) which are equipped with avionic systems, of the class commonly referred to as "drones". Although networks according to embodiments of the invention are primarily aerial with three degrees of positional freedom for nodes, various embodiments may also include nodes aboard satellites in predetermined earth orbits, nodes installed on mobile surface-based vehicles (with two degrees of positional freedom), as well as nodes in stationary ground-based structures (with no degrees of positional freedom).

According to embodiments of the present invention, the positions of mobile nodes can be dynamically reconfigured to provide, maintain, and restore LOS communications to optimize link bandwidth, quality, network coverage, and/or security.

Embodiments of the present invention are beneficial in various industries and sectors, including but not limited to: military and defense; disaster recovery; remote surveillance and monitoring systems; and space-based communication networks.

### BRIEF DESCRIPTION OF THE DRAWINGS

The subject matter disclosed may best be understood by reference to the following detailed description when read with the accompanying drawings in which:
Fig. 1 conceptually illustrates a mobile hybrid mesh network according to an embodiment of the present invention.
Fig. 2 illustrates a repositioning of a mobile node of a network to circumvent an obstruction that has disrupted LOS communications with another node of the network, according to an embodiment of the present invention.
Fig. 3 illustrates a predictive positioning of a mobile node of the network to avoid an obstruction that could disrupt LOS communications with another node of the network, according to an embodiment of the present invention.
Fig. 4 illustrates the resources of the mesh network for positional-configuration and control of the mobile UAV node platforms for acquiring, maintaining, and recovering optimal LOS among the nodes, according to an embodiment of the present invention.

For simplicity and clarity of illustration, elements shown in the figures are not necessarily drawn to scale, and the dimensions of some elements may be exaggerated relative to other elements. In addition, reference numerals may be repeated among the figures to indicate corresponding or analogous elements.

### DETAILED DESCRIPTION

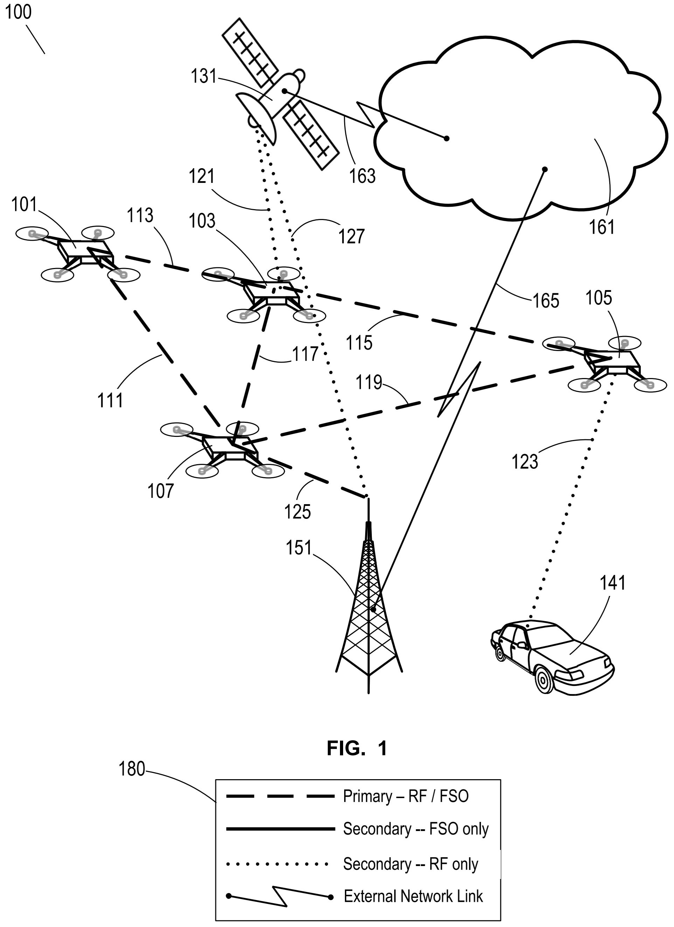

Fig. 1 conceptually illustrates a mobile hybrid mesh network **100** according to an embodiment of the present invention. Network **100** includes nodes **101, 103, 105,** and **107,** each of which is aboard a UAV platform capable of VTOL operation and provided with suitable avionic systems, network interfaces, and data communications apparatus for intercommunication over links **111, 113, 115, 117,** and **119.** Although network **100** is principally implemented on VTOL UAV platforms, in related embodiments, network **100** also includes a node **131** aboard a satellite in Low Earth Orbit (LEO) communicating with node **103** via a link **121,** a node **141** aboard a terrestrial vehicle communicating with node **105** via a link **123,** and a node **151** at a ground station communicating with node 107 via a link **125,** and with satellite **131** via a link **127.** Further, in a related embodiment, network **100** also includes non-VTOL UAV platforms. In addition, network **100** includes connections to an external network **161** (e.g., the Internet) such as via a link **163** to satellite-based node **131** and a link **165** to ground station-based node **151.** External network **161** is not a part of network **100,** but in various embodiments of the present invention, network **161** and network **100** are connected and may intercommunicate.

The modality of the communications supported by the nodes via the respective links is keyed to a legend **180.**

Within the scope of the present invention, network **100** is primarily concerned with LOS among the UAV-based nodes. Although satellite-based node **131,** terrestrial vehicle-based node **141,** and ground-station-based node **151** may participate in LOS-related transactions (e.g., to provide data and other resources), they are not actively controlled according to the LOS control scheme discussed herein.

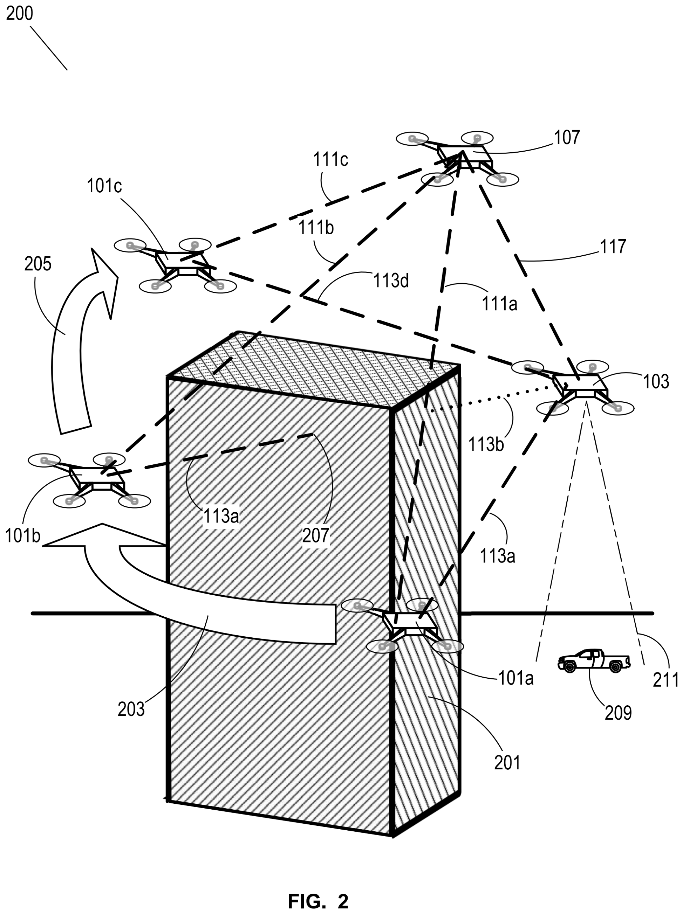

Fig. 2 illustrates a repositioning of mobile node **101** of the network shown in Fig. 1, to circumvent an obstruction **201** that has disrupted LOS communications between node **101** and node **103** of the network, according to an embodiment of the present invention. Three positions of node 101 are shown:
an initial position **101a** communicating with node **103** via a link **113,** shown in an initial orientation **113a;**
an intermediate position **101b** following a move **203** which has caused an interruption in LOS of link **113,** resulting in a first segment **113a,** which has been obstructed by a structure **201** at an intersection point 207, such that combined FSO communications of link segment **113a** is blocked, and thus a link **113** second segment **113b** is limited to RF communications (in practice, not only will FSO communications be blocked by an obstructing object, such as structure **201,** but RF communications may be negatively impacted as well); and
a final position **101c** following a move **205,** which has been calculated by the network as a compensating move to recover LOS communication between node **101** and node **103** via link **111** which is now in an orientation **113d.**

One of the considerations in choosing node **101** to make move **205,** rather than choose node **103** to make a compensating move, is that (in this non-limiting example), node **103** has been assigned a priority task of carrying out a visual surveillance **211** of a subject **209,** whereas node **101** is not assigned to remain in any particular location at this time. It is noted that even though node **101** in position **101b** has lost LOS communications with node **103,** node 101 still maintains full communications with node **107,** and thus still has access to network **100** and the data resources thereof. Although node **101** can still communicate with node **103** (via network node-hopping across still-active LOS FSO links, and also via RF link), the quality of network **100** connectivity is degraded by the loss of LOS between node **101** and node **103.** In this embodiment of the present invention, LOS is readily recovered in case of loss, to restore connection bandwidth and quality.

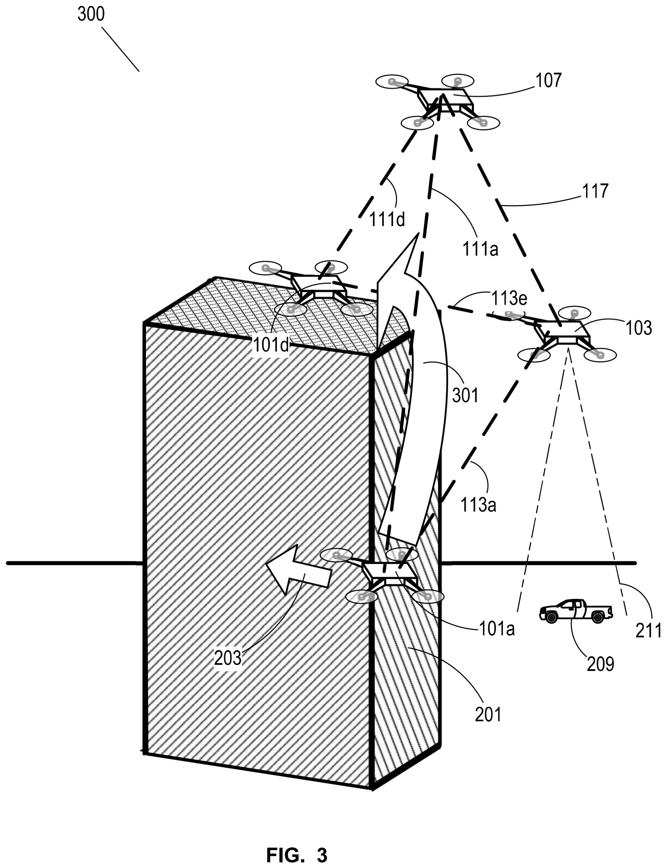

In another embodiment of the present invention, loss of LOS is predicted. Fig. 3 illustrates a predictive positioning **300** of mobile node **101** to avoid obstruction **201** that could disrupt LOS communications with another node in the network, according to an embodiment of the present invention. In this embodiment, mobile node **101** is initially moving in direction **203,** but the network predictively calculates that if mobile node **101** continues moving in direction **203,** then it will move into a position where it will lose LOS with mobile node **103** on account of obstruction by structure **201.** The network assesses that mobile node **103** has a higher priority on its present position than mobile node **101** has on its present movement, and, to prevent loss of LOS between mobile node **101** and mobile node **103,** the network re-directs mobile UAV platform of node **101** to move in a direction **301** instead, to a new position **101d,** which avoids having structure **201** obstruct LOS between mobile node **101** and mobile node **103.**

Predictively avoiding loss of LOS (as shown in Fig. 3) may be preferable to restoring LOS after loss of LOS (as shown in Fig. 2), because maintaining LOS is generally easier than having to reacquire LOS after loss. Nevertheless, it may not always be possible to predict loss of LOS, or to prevent loss of LOS, and therefore the network should be able to handle both maintenance and recovery of LOS.

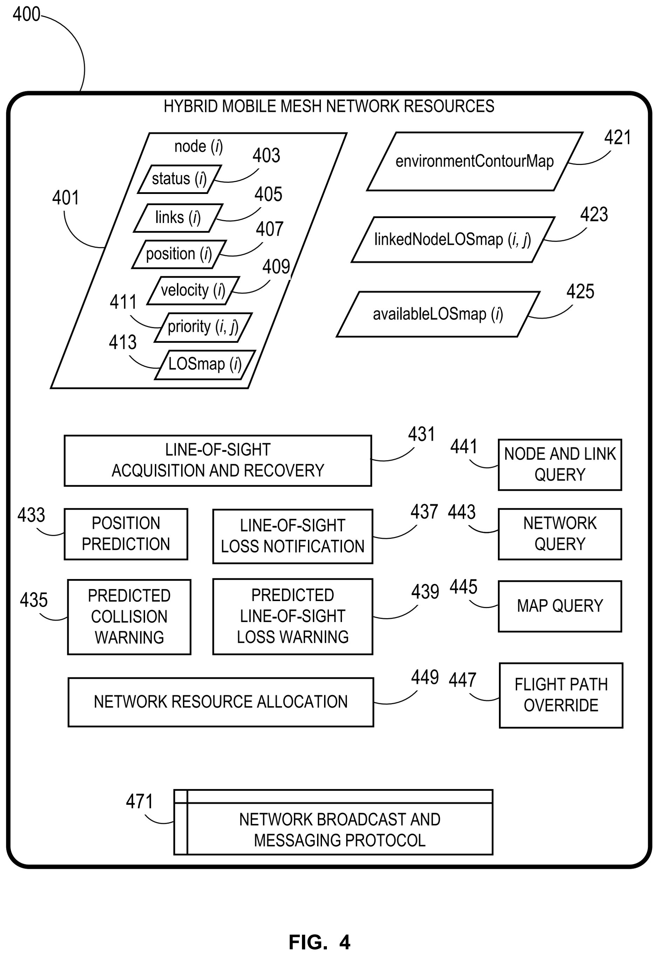

Fig. 4 illustrates resources **400** of mesh network **100** (Fig. 1) for positional configuration and control of the mobile nodes for acquiring, maintaining, and recovering optimal LOS among the nodes, according to an embodiment of the present invention. As with networks in general, mobile mesh network **100** provides a number of data resources for coordinated use by individual nodes as well as groups of nodes working together. As shown in Fig. 4, the resources include data storage resources as well as data processing resources.

Among the data storage resources of network **100** according to an embodiment of the present invention, is a node status data storage resource **401** which includes data for all the nodes, denoted in general as node (*i*), where the integer *i* ranges from 1 to N, the number of nodes generally in network **100.** More specifically, this data includes, but is not limited to:
status (*i*) **403**, which stores the data indicating the health and status of node (*i*), including, but not limited to transmit/receive component condition for both RF and FSO data communications; processor condition and temperature, available memory; and performance issues and flight status of the UAV platform of node (*i*), *e.g.,* battery charge, avionics readiness, etc.
links (*i*) **405,** which stores data about the active communication links of node (*i*), including data rates, signal-to-noise ratio, connection times, quality, and stability, etc.;
position (*i*) **407,** which stores the global position vector (including altitude) of the UAV platform of node (*i*);
velocity (*i*) **409,** which stores the velocity vector (relative to stationary) of the UAV platform of node (*i*);
priority (*i*, *j*) **411,** which stores the assigned positional priority of node (*i*) relative to a different node (*j*) in the event that the relative positions of two nodes must be adjusted, positional priority indicates whether which node UAV should be moved - that of node (*i*) or that of node (*j*) - or whether both node UAVs should be moved, and if so, by what relative amounts;
LOSmap (*i*) **413,** which stores a data description of the space around node (*i*) where there is LOS to and from node (*i*). Nominally, this would be in terms of a spherical coordinate system specifying the *θ* and *φ* angular directions in which node (*i*) has LOS to the outer periphery of network **100,** including the linear extent r of the LOS, which is limited in r wherever there is an obstructive feature of the environment, in which case *r* is simply the linear distance from node (*i*) to the obstructive feature.

It is noted that the *r, θ*, and *φ* spherical coordinates are readily converted to Cartesian coordinates, and vice-versa, by well-known and well-supported devices, and, in a related embodiment of the present invention, by coordinate data processing resources (not illustrated) of network **100.**

In addition to the node-related data storage resources listed above, embodiments of the present invention provide the following data storage resources related to network **100** as a whole:

An environmentContourMap **421** stores data representing the environment of network **100,** including all the natural features (*e.g*., hills and mountains, valleys, dunes, cliffs, chasms, bodies of water, trees and forests, etc.) and artificial features (*e.g*., buildings, bridges, elevated highways, walls, towers, chimneys, signage, monuments, and other structures) of the environment, notably features capable of obstructing LOS. The term *"contour map"* herein denotes a topographical map including contour lines representing the intersection lines of an (imaginary) elevated plane with the terrain and other features of the environment. Associated with each contour line is the altitude of the elevated plane in which the contour line lies. According to embodiments of the present invention, the contour map is rendered as a data object in a format which is compatible with all the individual resources **400** of network **100.** In particular, the data processing resources of network **100** are capable of transforming parts of, or the entirety of, environmentContourMap **421** from its native format into a 3-dimensional wire-frame data representation of the environment in which network **100** is operating.

According to a related embodiment, this wire-frame representation is data-equivalent to environmentContourMap **421,** and in another related embodiment, environmentContourMap **421** is rendered directly in a 3-dimensional wire-frame data format.

A linkedNodeLOSmap (*i*, *j*) **423** is a submap of the environment data in environmentContourMap **421,** containing the regions of the environment which correspond to Lines-Of-Sight common to both node (*i*) and to node (*j*), where node (*i*) and node (*j*) are connected, or are intended to be connected via an FSO communication link. In geometrical set terminology, linkedNodeLOSmap (*i*, *j*) **423** is the intersection of LOSmap (*i*) **413** with LOSmap (*j*) **413.**

An availableLOSmap (*i*) **425** is another submap of the environment data in environmentContourMap **421,** containing the regions of the environment which correspond to Lines-Of-Sight common to node (*i*) and also common to *all other nodes* to which node (*i*) is connected, or is intended to be connected via FSO communication links. In geometrical set terminology, availableLOSmap (*i*) **425** is the iterative intersection of LOSmap (*i*) **413** with *all* LOSmap (*j*) **413,** where (*j*) ranges over *all* values such that node (*i*) and node (*j*) are, or are intended to be connected together via an FSO communication link. The significance of availableLOSmap (*i*) is that *it indicates all positions where the UAV of* node (*i*) *can be located and still maintain all existing and intended LOS FSO communication links.*

According to certain embodiments of the present invention, all data storage resources for network **100,** are continuously updated in real time. This includes, but is not limited to node status data resource **401** (status (*i*) **403;** links (*i*) **405;** position (*i*) **407;** velocity (*i*) **409;** priority *(i, j*) **411;** LOSmap (*i*) **413);** and in addition, environmentContourMap **421** as well as linkedNodeLOSmap (*i*, *j*) **423,** along with availableLOSmap (*i*) **425.** Thus, any query made at any time via network **100** for any of these elements in data storage will always return a currently valid data response.

According to embodiments of the present invention, among the data processing resources of network **100** is a Line-Of-Sight Acquisition and Recovery Service **431,** which receives input arguments (*i*, *j*), specifying both node (*i*) and node (*j*) as the nodes which need to acquire or recover LOS between them. Line-Of-Sight Acquisition and Recovery Service **431** utilizes other data processing resources (as disclosed herein) along with a Flight Path Override module **447** (discussed in detail below) to position one or more UAV node platforms to effect the acquisition or recovery of LOS between node (*i*) and node (*j*). In particular Line-Of-Sight Acquisition and Recovery Service **431** is responsive to a predicted loss of Line-Of-Sight warning (as described below), and is capable of utilizing Flight Path Override module **447** to maintain LOS between node (*i*) and node (*j*). In a related embodiment, if node (*i*) and node (*j*) currently have LOS connectivity, then Line-Of-Sight Acquisition and Recovery Service **431** confirms this status, and cancels any active predicted loss of Line-Of-Sight warning.

According to embodiments of the present invention, among the data processing resources of network **100** is a Position Prediction Service **433,** which receives an input (*i*) specifying the UAV of node (*i*), and computes an anticipated future vector position of the UAV based on the current vector position of node (*i*) extrapolated according to the current vector velocity of node (*i*) over a specified time interval Δ*t.* It is noted that, in practice, UAV's can quickly accelerate and quickly change direction, so the velocity of node (*i*) may in those cases be valid only for a short amount of time. Nevertheless, Position Prediction Service **433** can provide valuable information in those cases where velocity is roughly constant over a period of time.

According to embodiments of the present invention, among the data processing resources of network **100** is a Predicted Collision Warning Service **435.** Based on data provided by Position Prediction Service **433** for all nodes, along with data provided by environmentContourMap **421,** Predicted Collision Warning Service **435** provides a warning of an anticipated collision between one or more nodes as well as a warning of an anticipated collision between nodes and features of the environment (such as buildings). As detailed below, the warning is broadcast over network **100.**

According to embodiments of the present invention, among the data processing resources of network **100** is a Line-Of-Sight Loss Notification Service **437,** which continually queries the nodes of network **100** for their connectivity status, and issues a notification when an LOS FSO communication connection is unintentionally lost. The notification includes the (*i*, *j*) identities of the now-disconnected nodes. As detailed below, the notification is broadcast over network **100.**

According to embodiments of the present invention, among the data processing resources of network **100** is a Predicted Line-Of-Sight Loss Warning Service **439.** Similar to Predicted Collision Warning Service **435,** Predicted Line-Of-Sight Loss Warning Service **439** invokes Position Prediction Service **433** for all nodes *i* currently supporting LOS FSO communication, and queries availableLOSmap (*i*) data resources along with Position Prediction Service **433** to determine if any one or more of nodes *i* is predicted to leave a region supporting LOS connectivity with one or more other nodes. If the predicted position of a node *i* would be outside a region of LOS with another node *j*, then Predicted Line-Of-Sight Loss Warning Service **439** signals a Predicted Line-Of-Sight Warning to that effect over network **100,** such as via broadcast, as described below. In an embodiment of the invention, when there is a predicted Line-Of-Sight loss warning, Line-Of-Sight acquisition and recovery service attempts to maintain LOS and prevent loss of LOS. The term *"acquire"* and the like in the context of LOS herein denotes not only initially establishing LOS but also maintaining LOS by preventing a loss condition, and also re-establishing LOS after a loss of LOS.

According to embodiments of the present invention, among the data processing resources of network **100** is a Node and Link Query Service **441,** which provides convenient access to data resource **401** regarding data related to node (*i*) all nodes of network **100.**

According to embodiments of the present invention, among the data processing resources of network **100** is a Network Query Service **443,** which provides convenient access to all data resources related to network **100.**

According to embodiments of the present invention, among the data processing resources of network **100** is a Map Query Service **445,** which provides convenient access to all map-related data storage of network **100.**

According to embodiments of the present invention, among the control resources aboard a node UAV platform is Flight Path Override module **447,** which receives an input with a velocity vector to override and replace the present UAV velocity. If this request comes from Line-Of-Sight Acquisition and Recovery Service **431,** then Flight Path Override Module **447** queries Node and Link Query Service **441** to determine if node (*i*) priority will allow its current flight path to accept the override request, and if so, to redirect the avionics control of the UAV with the replacement velocity. If this request comes from Predicted Collision Warning Service **435,** in an embodiment of the present invention, the override applies regardless of node (*i*) priority.

According to embodiments of the present invention, among the network management resources of network **100** is a Network Resource Allocation Service **449,** which assigns each of the resources of network **100** (including itself) to specific nodes. In a related embodiment each node is provided adequate data storage, program storage, and data processing capacity for accommodating all of the network resources **400.** This provisioning is done for purposes of redundancy and fault-tolerance, so that network **100** will be assured of always having the required data resources and data processing resources necessary for proper functioning. However, even though each node may separately possess the hardware, firmware, and software for all the network data resources, it is not necessary or even desirable that every node provide for every data resource and every data processing resource. With the particular exception of Flight Path Override Module **447** (which is a component of each individual node), it is more efficient and less burdensome to distribute the operation of the data resources and the data processing resources across the network, while still providing the necessary redundancy and backup to provide that network **100** will be robust and fault-tolerant. The particular distribution of resources is performed by Network Resource Allocation Service **449,** which assures sufficient redundancy and emergency backup. For example, if a specific node drops out of the network (such as by becoming inoperative), Network Resource Allocation Service **449** reassigns the resources from the now-missing or defunct node to appropriate other nodes. For this reason Network Resource Allocation Service **449** itself should be redundantly-operated on as many nodes as possible without imposing undue burdens on network **100.**

According to embodiments of the present invention, interactions among the data storage resources and the data processing resources of network **100** are all performed in accordance with a Network and Broadcast Messaging Protocol **471.** In this schema, a data processing resource invokes another data processing or data storage resource by placing a message on the network. A node which has been assigned to perform the requested data storage/retrieval service and/or the data processing service will then return the response to the sender of the message. In those cases where there are redundant nodes, there will be a priority sequence by which the redundant node(s) will wait before answering, and will answer only if the primary node for that service does not respond. In addition to sending messages to specific nodes, Network and Broadcast Messaging Protocol **471** also provides for general broadcast of notifications and warnings to all nodes at the same time.

In this manner, the maintenance of LOS connections according to the embodiments of the invention are reliably carried out via network **100** operating as an organic unit, with the various services and their required sub-services distributed evenly across network **100.**

## Claims

1. A wireless mesh network for Line-Of-Sight (LOS) node communication, the wireless mesh network comprising:
a plurality of mobile nodes in an environment, each of which is aboard an Unmanned Aerial Vehicle (UAV) platform capable of Vertical Takeoff and
Landing (VTOL) operation and which includes a flight path override module operative to change a velocity of the UAV platform, wherein at least two nodes of the wireless mesh network have a communication capability limited to LOS;
a set of data resources available to nodes over the wireless mesh network, wherein the set of data resources includes:
an environment contour map storing data which represents features of the environment capable of obstructing LOS node communication; and
a Line-Of-Sight acquisition and recovery service, operative to position a UAV node platform according to data of the environment contour map and utilizing the flight path override module to acquire LOS.

2. The wireless mesh network of claim 1, wherein at least two nodes of the plurality of nodes communicate via Free-Space Optical (FSO) communications.

3. The wireless mesh network of claim 2, wherein at least two nodes of the plurality of nodes further communicate via Radio Frequency (RF) communications.

4. The wireless network of any of claims 1-3, wherein the set of data resources further includes:
a Line-Of-Sight loss notification service operative to signal a loss of Line-Of-Sight notification, wherein the Line-Of-Sight acquisition and
recovery service is responsive to the loss of Line-Of-Sight notification to recover LOS.

5. The wireless network of any of claims 1-4, wherein the set of data resources further includes:
a position prediction service, for predicting the position of a UAV node platform; and
a predicted Line-Of-Sight loss warning service operative to receive a predicted UAV position and to signal a loss of Line-Of-Sight warning,
wherein the Line-Of-Sight acquisition and recovery service is responsive to the loss of Line-Of-Sight warning to maintain LOS.

6. The wireless network of any of claims 1-5, wherein the set of data resources further includes:
an LOS map for a node, wherein the LOS map stores data relating to the space surrounding the node where there is LOS to and from the node, up to an outer periphery of the network.

7. The wireless network of claim 6, wherein the set of data resources further includes:
a linked node LOS map for a pair of nodes which are connected by an LOS data communication link, wherein the linked node LOS map stores data relating to the regions of the environment which correspond to Lines-Of-Sight common to both nodes of the pair of nodes.

8. The wireless network of claim 7, wherein the set of data resources further includes:
an available LOS map for a node, wherein the available LOS map stores data relating to all positions where the UAV platform of the node can be located while still maintaining LOS with all other nodes having LOS communication links to the node.
